# EUROPEAN PATENT SPECIFICATION

(11) **EP 3 878 719 B1**
(45) Date of publication and mention of the grant of the patent: **02.11.2022**
(21) Application number: 20161938.4
(22) Date of filing: 09.03.2020
(51) Int. Cl.: B62D 27/06, B62D 21/00, B62D 29/00, B62D 27/02

(54) **SYSTEMS AND METHODS FOR JOINING VEHICLE COMPONENTS USING ADHESIVE**
SYSTEME UND VERFAHREN ZUM VERBINDEN VON FAHRZEUGKOMPONENTEN UNTER VERWENDUNG VON KLEBSTOFF
SYSTÈMES ET PROCÉDÉS D'ASSEMBLAGE DE COMPOSANTS DE VÉHICULE UTILISANT UN ADHÉSIF

(43) Date of publication of application: 15.09.2021
(73) Proprietor: Arrival Limited, London W14 8TS (GB)
(72) Inventor: DEWE-MATHEWS, Henry, London, W14 8TS (GB); MORTON, Douglas, London, W14 8TS (GB)
(74) Representative: Durling, Barbara Eleanor Ravenhill

(56) References cited:
- EP-A1- 2 301 826
- WO-A1-2016/197047
- DE-A1-102016 206 931
- DE-U1-202017 105 474
- US-A1- 2012 235 401

## Description

### Field

The present disclosure relates to systems and methods for joining vehicle components using adhesive.

### Background

Conventional automotive manufacturers often design vehicles by first finalising the design of a vehicle, and then determining how the vehicle can be built. Although this allows conventional vehicle manufacturers to build upon many decades of experience in the field, adherence to traditional design methods means that non-conventional assembly techniques are often overlooked because the design of the vehicle includes traditional assembly components, including traditional fixation, such as welding. Iterative improvements in design and manufacturing processes may make sense in the context of mass-produced vehicles powered by internal combustion engines (ICEs), but in the same way that the emergence of improved electric vehicle technologies allows for new vehicle structures, it is also an opportunity to develop improved manufacturing processes that make use of modern manufacturing technologies, and support customisation of vehicles according to user specifications.

Fixation of structural vehicle components by adhesive has many advantages. In particular, adhesive fixation of vehicle components can decrease the weight of a vehicle, decrease the number of parts, and decrease the complexity and duration of assembly, compared to using welding. Perhaps more usefully, the use of adhesive as a fixation means between vehicle components facilitates automated assembly.

US 2012/0235401 discloses a device and method for the protection of a first member and second member from corrosion by utilizing a connector that bonds the members without allowing direct contact of the members.

DE 20 2017 105474 discloses a system comprising a connection node and at least one first connection body, wherein the connection node comprises a one-part or multi-part connection node central body, a first connection element for joining with the connecting body and at least one second connecting element for joining with a second connecting body, the first connecting element and the second connecting element are connected or connectable to the connecting node central body, and wherein at least a part of the connecting node central body and/or the first connecting element and/or the second connecting element is/are produced by means of a generative process, for example 3D printing, and/or a casting process.

DE 10 2016 206931 discloses a flow-limiting device for mounting on a hollow profile for limiting the flow movement of an adhesive along the surface of the profile consisting of a flat cover and one with an opening for inserting the profile formed frame, which is connected to the cover via at least one connecting web, the at least one connecting web in at least one web section has a height which is less than the height of the frame viewed in the same direction.

EP 2 301 826 discloses a node element comprising a fixing flange for manufacturing a connection with a frame hollow profile. The fixing flange has a screw-shaped circulating adhesive channel transverse to a sliding direction of the frame hollow profile. The adhesive channel runs to the outer side of the fixing flange.

WO 2016/197047 discloses a joint design to provide an adhesive injection path to connect tubes for a space frame, where a space frame may be a vehicle chassis. The joint may connect carbon fiber tubes and may be designed with different shapes and configurations. The joint may include acceptor ports that may mate with a tube and simultaneously contact an inner surface and outer surface of the tube. The joint may also include centering features which may create a space between a surface of the tube and a surface of the joint through which adhesive may flow. Adhesive can be injected into a connection space between the joint and the tube through one or more integrated structural features in the joint that can provide a channel for directing adhesive to the connection space.

### Summary

In general terms, this disclosure provides improved methods and systems for joining two or more vehicle components together by injecting adhesive into a space between the two components. The components to be joined together can be structural vehicle components, that may otherwise be joined by welding in a conventional vehicle. The structural components may form part of the chassis of a vehicle.

To ensure that the adhesive flows into a space between the two components (where it is needed), the joint assembly generally comprising a wall surrounding a hollow cavity, a projection for insertion into the hollow cavity, and a guide channel between a first volume outside the hollow and a second volume inside the hollow, wherein the channel is configured to guide adhesive from the first volume to the second volume towards a space defined between the wall and the projection when the projection is disposed in the hollow. In any of the embodiments described herein, the space between the projection and the hollow may be a substantially continuous circumferential space or it can comprise a plurality of discrete spaces.

In some exemplary embodiments, an insert is used to guide adhesive towards the circumferential space between the projection and a hollow component, when the projection is seated within the hollow component. In some examples, this may be by using an insert to form a cavity with a closed end for accepting one of the components, wherein the closed end is designed to prevent or reduce the flow of adhesive away from the interface between the two parts. In other examples, the projection can comprise a network of channels which open (at their downstream end) into the circumferential space between two mated components. The upstream end of the channel should be accessible externally when the projection is seated within the hollow cavity.

In some implementations, the insert can be configured to be used as a piston to drive adhesive through channels within the piston to a space between two component parts to be adhered to each other. The present disclosure therefore provides methods and systems in which an insert comprising channels may be used as a piston to deliver adhesive to an interface between two components.

Methods of adhering first and second components are also provided. In general terms, in a first step of the method, the first component comprises a projection and the second component is configured to receive the projection in a hollow or cavity. The first and second components are arranged with respect to each other to form a gap, configured to be filled with adhesive, between a first surface of the first component and a second surface of the second component. In a second step, an adhesive is delivered into the adhesive gap and into contact with the first surface and the second surface. In a third step, the position of the first component and the second component is maintained for a predetermined curing time to allow the resultant adhesive bond to strengthen.

The systems and methods described in this document may be implemented in connection with a commercial passenger vehicle, such as a bus, and more particularly an electric commercial passenger vehicle. The systems and methods described in this document may also be implemented in a van, private passenger vehicle or other vehicle types, particularly electric vehicles. The aspects described may be particularly suited to these applications because of the possibility for automated assembly and automated adhesive delivery. These advantages and more will be better understood by reading the following summary and the detailed description.

In a first aspect, a system for joining vehicle components is provided. The system comprises a first component comprising a projection and a second component configured to receive the projection. The second component comprises a hollow interior and an open end into which the projection can be inserted. An insert or bung is configured to be disposed within the hollow interior of the second component to form the closed end of a cavity extending between the insert and the open end of the second component. The projection is configured to be received in the cavity and secured within the cavity with adhesive. The insert is configured to form a closed end of the cavity thereby to guide adhesive flow around the projection. To allow adhesive to be introduced into the cavity, least one of a side wall of the second component and the projection comprises a hole which is in communication with the cavity for delivering adhesive to the cavity.

In a second aspect, a joint between vehicle components is provided. The joint comprises the components described above, wherein the projection is secured within the cavity with adhesive. In a third aspect, a vehicle is provided, which includes a joint as described above. In a fourth aspect, an insert for an adhesive joint for a vehicle is provided.

In a fifth aspect, system for joining vehicle components comprises a first component comprising a projection, a second component comprising a hollow interior and an open end, and an insert configured to be disposed within the hollow interior to form a cavity between the insert and the open end of the second component to receive the projection. The projection is configured to be received in the cavity and secured within the cavity with adhesive. The insert comprises a channel comprising an upstream end and a downstream end. The downstream end opens into the cavity, and the upstream end is in fluid communication with an exterior volume to the cavity. The insert is configured to form a closed end of the cavity thereby to guide adhesive flow around the projection.

In any of the above aspects, the insert can comprise a body having first and second faces, and at least one side surface. The first face is configured to face into the cavity and the second face is configured to face away from the cavity. The side surfaces extend between the first and second faces and form an outer edge of the insert. The insert of the fourth aspect can be used in any aspects described in this document.

The insert can be configured to be seated adjacent to or against the free end of the projection. The projection and the second component can be sized so that a circumferential space is present between the projection and a sidewall of the second component when the projection is seated within the cavity. The space can be filled with adhesive to secure the projection within the cavity.

In some embodiments, the insert comprises one or more channels configured to provide fluid communication between the hole and the cavity. In these embodiments, the upstream opening of the channel is configured to be aligned with the hole in the side wall when the insert and the projection are seated within the hollow interior of the second component. In other embodiments, the hole opens through the sidewall directly into the cavity.

The channel may extend through the insert from a first channel end to a second channel end. The first end of the channel comprises an upstream opening into which adhesive can be introduced. The upstream opening can be provided in the first face of the insert. In this configuration, the hole for introducing the adhesive into the channel is provided in the projection. The hole in the projection is configured to align with the upstream opening to allow adhesive to be delivered into the insert.

The upstream opening may also be provided in a side surface of the insert. In this configuration, the hole for introducing the adhesive into the channel is provided in a the sidewall of the second component.

The upstream opening can also be provided in the second face of the insert. In this configuration, access to the hollow interior on the other side of the insert to the cavity can be provided to allow adhesive to be delivered to the upstream end of the channel. This can be through a second open end of the second component, or through another access opening.

The channel also comprises a downstream opening (in fluid communication with the upstream opening) which is configured to deliver adhesive into the cavity. The downstream opening can therefore be provided in the first face of the insert.

The channel in the insert can comprise multiple branches, with each branch having a downstream opening in the first face. The branched channel can deliver adhesive to multiple locations within the cavity and improve the distribution of adhesive within the joint. In some cases, the channel comprises an interior channel portion comprising a closed channel extending through the body of the insert, and an exterior channel portion comprising an open channel formed as a groove extending along a side surface of the insert. Forming a channel as a groove along a side surface of the insert means that adhesive can be delivered to the outer edge of the cavity, increasing the ease with which it can flow into the space between the projection and the side wall of the cavity. The insert may have two or more channels configured as described above, providing multiple injection ports for injecting adhesive into the insert.

Each downstream opening can be located at or adjacent to the side surface (or outer edge) of the insert. This can advantageously deliver adhesive directly into the space between the projection and the side wall of the cavity. The insert can further comprise alignment grooves configured to receive a runner or pins within the hollow interior of the second component to maintain the orientation of the insert within the hollow interior of the second component.

Optionally, the insert comprises two parts, wherein the closed portion of the channel is provided between the two parts. The insert can instead be formed as a single piece. However, the formation of interior channels may be easier in an insert comprising two halves and such a design may be better suited to manufacture by moulding.

Advantageously, the insert comprises a deformable material. Forming the insert of deformable material may provide several advantages. For example, a deformable insert allows the insert to deform as it is inserted into the hollow interior of the second component, which allows for variation in the dimensions of the parts, for example due to manufacturing tolerances. The deformability of the insert may also facilitate automated assembly, since less precise alignment of the parts is necessary compared to rigid mating parts. A deformable insert can also allow the projection to press against the insert within the cavity, thereby forming a seal between the projection and the insert that confines the adhesive to the spaces around the projection. The deformable material may be a foam material. Open-and closed-cell foams can be used. In the case of an open-cell foam, the insert may be configured to fill with adhesive and swell into the cavity to provide additional adhesion between components. Swelling of the insert may also be provided as a result of a chemical reaction between the foam material and the adhesive. The deformable material may alternatively be an elastomeric material.

A stop within the hollow interior of the second component can also be provided to limit the maximum insertion depth of the insert within the second component. Limiting the travel of the insert within the second component controls the depth and thus the volume of the cavity. Providing a stop can also facilitate alignment of the channel with the hole in the side wall in embodiments in which this configuration is used, and can facilitate the formation of a seal between the projection and the insert in corresponding sealed embodiments. However, it will be appreciated that a stop is not necessary to control or maintain the position of the insert and other arrangements (e.g. an interference fit between the insert and the second component) may be provided as an alternative or as an addition to the stop.

The projection on the first component can be tapered. This can facilitate location of the projection within the cavity (especially in the context of automated assembly), and also ensures that the projection is centred within the cavity to provide a circumferential space between the projection and the sidewall. Note that a circumferential space does not mean that the projection and cavity need to have a circular cross-section. In the context of this disclosure, the term circumferential is used in a broad sense to refer to the space surrounding the projection between the outer edge of the projection and the inner surface of the cavity.

In a sixth aspect, a method for joining two vehicle components is provided. The method comprises providing a first component having a projection and a second component having a hollow interior. The first component and the second component may be the first and second components described above. The method further includes introducing adhesive into the cavity. With the insert in place, the adhesive is guided into the space between the first and second components.

The insert (again, optionally the insert described above) is inserted into the hollow interior via an open end of the second component to form a cavity extending between a closed end formed by the insert and the open end. The projection is inserted into the cavity. This can happen after inserting the insert or at the same time. If the insert is inserted into the hollow interior from the opposite end to the projection, the insert may even be inserted after the projection. With the project and the insert in place, Adhesive is introduced into the cavity via a hole in a side wall of the second component or via a hole in the projection to file a space between the components and secure the first and second components together.

In a seventh aspect, a method of assembly a vehicle is provided. The method comprises joining two vehicle components according to the method described above. The two components may be two components of a chassis for the vehicle.

In an additional aspect, the systems and methods described above may be modified to allow access to the cavity through the insert from the opposite side of the insert, that is, the side that faces away from the cavity. It will be appreciated that in this configuration, the hole through which adhesive may be injected is not necessarily provided in the side wall of the second component and may instead be a second open end of the hollow body, or another opening along the hollow interior beyond the insert. In these embodiments, the insert also comprises a channel through which the adhesive can be introduced into the cavity.

In an eighth aspect, there is provided a system for joining vehicle components, the system comprising a first component comprising a projection having at least one side surface and an end surface and a second component comprising a hollow interior bounded by at least one sidewall and comprising an open end. The projection is configured to be received in the hollow interior of the second component. The projection comprises a branched channel extending from an upstream end to a plurality of downstream ends, wherein the plurality of downstream ends open onto the at least one side surface of the projection, and wherein the upstream end of the channel is accessible when the projection is received in the second component.

The second component can comprise a stop configured to limit the travel of the insert within the hollow interior of the second component to limit the maximum depth of the cavity. Optionally, the stop can be configured to limit the travel of the insert to a predetermined position, and wherein, in the predetermined position, the insert is adjacent a free end of the protrusion seated within the cavity.

The first component can comprise the upstream opening in a sidewall. The end wall of the projection may be closed such that adhesive cannot flow through the end wall of the projection. Alternatively, the channel may comprise an opening in an end wall of the projection, which may be closed with an insert. The insert may be configured to fit within the opening.

In some arrangements, the projection can be configured to receive the insert. The insert received in the projection can comprise at least a portion of the channel. The portion of the channel formed by the insert extends from an upstream end in fluid communication with the opening in the first component that is externally accessible. The downstream end(s) of the insert channel portions can be configured to be in fluid communication with the plurality of channels opening into the sidewalls of the projection. In this way, the channel that carries adhesive into the joint is formed of a first channel portion in the first component and a second channel portion in the insert.

The insert channel portion the channel can comprise an interior channel portion extending from the upstream opening comprising a closed channel extending through the insert; and an exterior channel portion comprising an open channel extending along a surface of the insert towards the downstream opening. The insert can comprise two parts, wherein a closed portion of the channel is provided between the two parts.

The insert can comprise a deformable material, such as foam. In some examples, the projection is tapered. These features, alone or in combination, can facilitate automated assembly of the first and second components. The projection can be secured within the cavity with adhesive.

In a further aspect, this disclosure provides a method for joining two vehicle components. The method includes the steps of: providing a first component comprising a projection having at least one side surface and an end surface and a second component comprising a hollow interior bounded by at least one sidewall and comprising an open end, inserting the projection into the hollow interior of the second component, wherein the projection comprises a branched channel extending from an upstream end to a plurality of downstream ends, wherein the plurality of downstream ends open onto the at least one side surface of the projection, and wherein the upstream end of the channel is accessible when the projection is received in the second component; and introducing adhesive into the channel via a hole in a side wall of the second component to deliver adhesive into the circumferential space between the projection and the second component.

A portion of the channel may be provided in an insert configured to be received in the projection. The method may further comprise using the channel portion in the insert to deliver adhesive from the upstream opening of the channel to the downstream opening.

In yet another aspect, this disclosure provides an insert for an adhesive vehicle joint. The insert comprises a body having first and second faces, and at least one side surface. A channel extends from a first end to a second end and configured as a delivery conduit for an adhesive. The first end of the channel comprises an upstream opening in the at least the first face or the second face. The channel comprises multiple downstream branches, and wherein each of the downstream branches opens into a side surface of the insert.

In any of the aspects described above, the insert may be provided as a separate component or it may be formed together with, or affixed to the projection prior to insertion of the projection into the second component. For example, the insert may be overmoulded onto the projection.

By providing a joint between the first and second components with the projection of the first component inside a cavity in the second component, formed by an insert and accessed for delivering adhesive by a hole, it is possible to assemble the first and second components, and then deliver a volume of adhesive into the cavity to secure the two parts, without or with a reduced amount of the adhesive flowing away from the interface between the parts, since the flow of the adhesive is constrained by the cavity. This advantage may also be provided by providing an adhesive flow path (e.g. a channel) comprising a downstream opening (or multiple downstream openings) in a side surface of the projection configured to face the sidewall of the hollow cavity when the projection is inserted into the second component.

In any of the embodiments described above, the surfaces of one or both of the first and second components are pre-treated to improve on the resultant bond strength. Such pretreatment may include but is not limited to cleaning, degreasing, etching, scoring, or chemically priming the first and/or second surfaces. The predetermined curing time may be calculated to allow partial curing of the adhesive or alternatively may be calculated to allow full curing of the adhesive. In the case of partial curing, the adhesive bond may only exhibit a fraction of the fully cured strength which is sufficient for further processing of the components to be carried out. Further, the components may optionally be heated or held at a set temperature to reduce the predetermined curing time.

Limiting or preventing the flow of adhesive away from the interface between the two parts may increase the reliability with which the parts are securely adhered together, reduce the volume of adhesive required, and provide a stronger joint, better suited for use in a vehicle chassis. In embodiments where the insert comprises a channel, the insert can be used not only to contain the glue within the useful region of the joint, but also as a delivery conduit for adhesive. Forming a delivery conduit within an insert (made of a polymeric material) may be significantly easier, more cost effective, and lighter than forming a conduit within the components to be joined and the use of a conduit enables more control and targeted delivery of adhesive flow.

These advantages and others will be better understood from the following description.

### Brief description of the Drawings

Specific embodiments are described below in the Detailed Description by way of example only and with reference to the accompanying drawings, in which:
Figure 1 shows, in exploded perspective view, a system for joining two vehicle components;
Figure 2 shows a cross-sectional side view of an assembled joint, including a first possible flow path for adhesive;
Figure 3 shows a cross-sectional side view of an assembled joint, including a second possible flow path for adhesive;
Figure 4 shows a cross-sectional side view of an assembled joint, including a third possible flow path for adhesive;
Figure 5a shows a perspective view of an insert for use in an adhesive joint;
Figure 5b shows a exploded view of the two halves of a two part insert.
Figure 6 shows a cross-sectional side view of an assembled joint comprising two projections received in a receiving component.
Figure 7 shows a cross-sectional side view of an assembled joint including a further possible flow path for adhesive;
Figure 8 shows a cross-sectional side view of an assembled joint comprising another possible flow path for adhesive;
Figure 9 shows a schematic representation of an insert comprising a branched adhesive flow path with openings in four faces of the insert; and
Figure 10 shows a cross-sectional side view of a joint assembly in which the insert is configured to act as a piston for delivering adhesive.

### Detailed Description

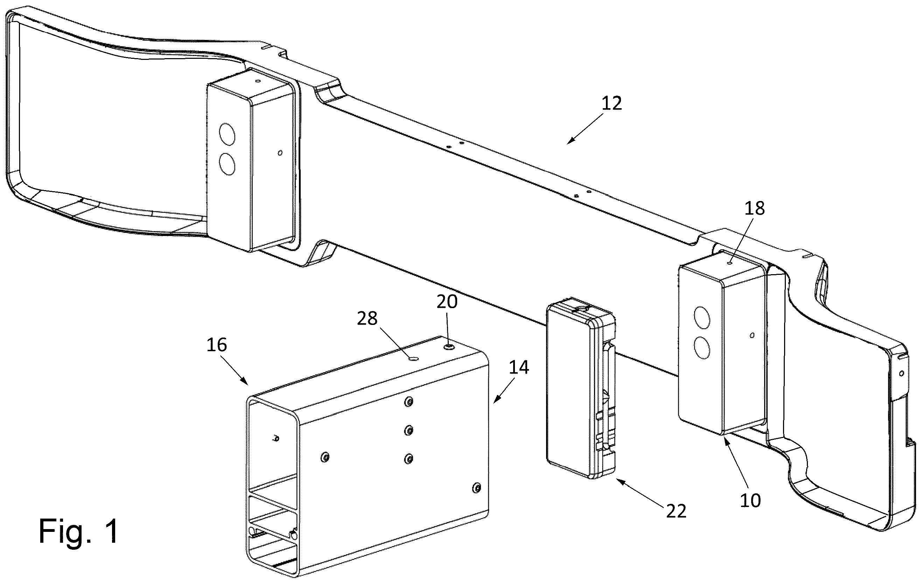

Figure 1 shows an exploded view of a joint between two vehicle components. The joint comprises a projection 10 extending from a first component 12, and a cavity 14 formed in a second component 16, which is configured to receive the projection 10. The joint is thus akin to a mortise and tenon arrangement. The components shown in Figure 1 include structural components forming part of the chassis for an electric vehicle and are formed of cast aluminium (in the case of the first component 12) and extruded aluminium (in the case of second component 16). However, the advantages of the joint described in this document are applicable to a wide range of vehicle types, materials, manufacturing techniques and components. For example, components formed of other metals or plastics may also be fixed to each other using the systems and methods described in this document. The joint can be comprised in an automotive chassis, that is the load bearing base-frame of a vehicle.

The projection 10 is sized to be received within the cavity 14, as shown in Figure 1. With the projection 10 inserted into the cavity 14, a circumferential space is provided between the outer surface of the projection 10 and the inner surface of the cavity 14 into which adhesive can be delivered to fix the projection 10 in the cavity 14. Any suitable adhesive can be used. Polyurethane adhesive is one example of a suitable adhesive but other adhesives may also be used.

The cross-section of the projection 10 shown in Figure 1 is generally rectangular, but any cross-sectional shape can be used. The cross-section of the projection can vary along its length. For example, the projection 10 can taper to its free end (the end not fixed to the first component). This can be advantageous for a number of reasons. For example, a tapered projection can ensure that space for adhesive extends all the way around the circumference of the projection 10. The tapered shape can also facilitate insertion of the projection 10 into the cavity 14, which is particularly advantageous for automated assembly.

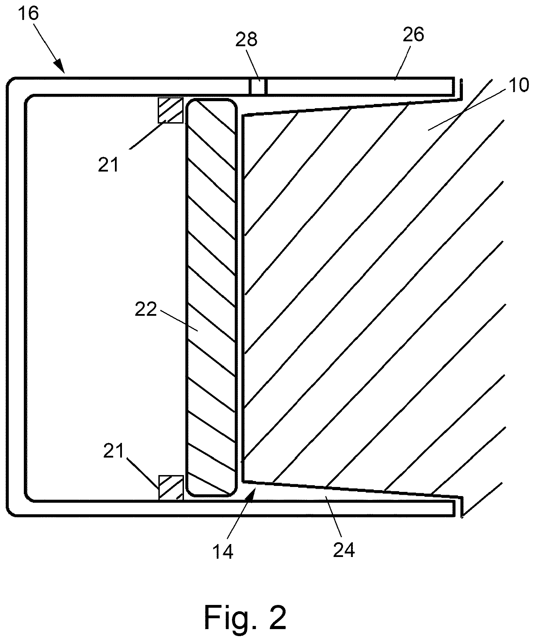

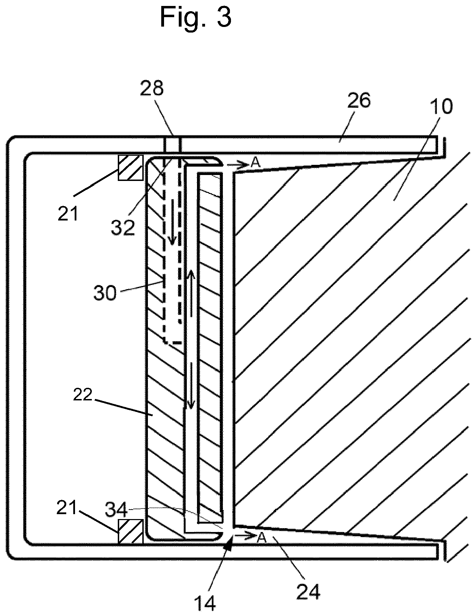

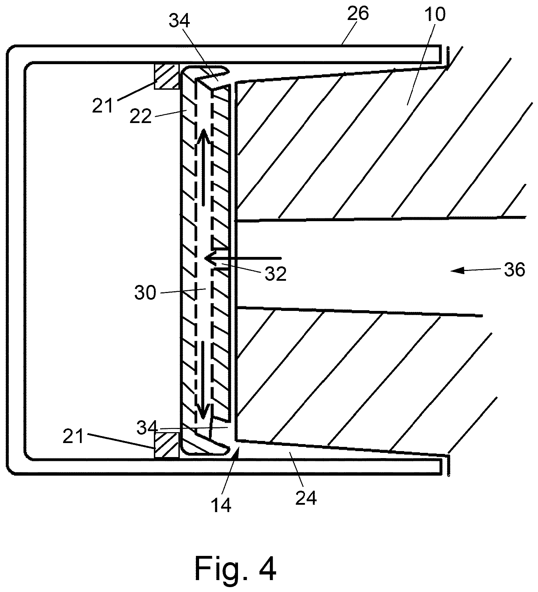

The projection 10 can be solid (as shown in Figures 2 and 3) or it may be hollow. In some examples, the projection 10 can comprise a hole through which adhesive can be introduced into the cavity 14, as will be explained in more detail with reference to Figure 4. The projection 10 can also include additional openings 18 through which mechanical fastening means can be introduced between the first component 12 and the second component 16. Corresponding openings 20 can be provided in the second component 16 which align with the openings 18 in the first component 12 when the projection 10 is seated within the cavity 14.

The second component 16 comprises a hollow interior. The hollow interior may extend along the length of the second component, or it may be formed as a blind bore. The hollow interior is accessed via an open end. The projection 10 is configured to be inserted into the open end. The hollow interior can also comprise a vent hole (not shown) to allow air to escape the cavity as the adhesive is injected into the joint. The vent hole can also act as an indicator that sufficient adhesive has been delivered to the cavity 14 because when the cavity is full, the adhesive will begin to leak through the vent hole.

A insert or insert 22 is provided, which is sized to fit within the hollow interior of the second component 16. The insert 22, once inserted into the hollow interior is configured to form a closed end to the cavity 14. The cavity 14 configured to receive the projection therefore extends from the insert 22 to the open end of the second component 16. In this way, a cavity 14 having a closed end can be formed, even if the second component is hollow along its length. Even where the second component 16 comprises a closed end, the use of a insert 22 to form the closed end of the cavity can ensure that the cavity 14 is sized to receive the projection 10. It therefore prevents (or reduces) leakage of the adhesive from the cavity 14, which in turn improves the distribution of adhesive within the joint, concentrating it in the space between the two components, which is where it is needed.

It is not necessary that the insert 22 completely seals the cavity 14 to prevent or reduce the escape of adhesive. Instead, the insert 22 may form a loose or partial fit with the hollow interior of the second component 16 or may be a clearance fit with the hollow interior of the second component 16. The insert 22 is designed to guide adhesive towards the interface between the projection and the cavity. That is, the insert is designed to impede or prevent the flow of adhesive out of the cavity 14 such that the adhesive fills the cavity 14 before it leaks away from the area in which it acts to form a bond between the projection 10 and the cavity 14. The insert 22 can therefore take the form of an insert sized to be received within the second component 16 with a clearance or an interference fit and configured to impede, limit, or prevent the flow of adhesive along the hollow interior of the second component 16 and away from the interface between the first and second components 12, 16.

The insert 22 can have various configurations as will be described in more detail below with reference to Figures 2-4. For example, the insert 22 can comprise channels to direct the flow of adhesive within the cavity. In general, the insert 22 is configured to direct the flow of adhesive towards the outer edge of the cavity 14, which is where the interface between the projection and the cavity is located. In some examples, the insert 22 is formed of a deformable material, such as foam. The foam can be open- or closed-cell foam. Although an open cell foam may allow some flow of adhesive through the insert, the flow of adhesive is slowed by the insert 22 so that the adhesive preferentially fills the cavity 14 before seeping out through the foam. Additionally, an open-cell foam may swell on being imbibed with adhesive and therefore an appropriate design of an open-cell foam insert can provide an improved seal. A deformable insert 22 may be advantageous because the deformability can accommodate variations in the dimensions of the first and second components 12, 16. Since the insert 22 is configured to concentrate adhesive in the region between the projection 10 and the cavity 14, a fluid tight seal is not required. Instead, the insert 22 serves to limit the flow of adhesive away from the interface between the projection 10 and the cavity 14. Limiting the flow of adhesive away from the area in which it is needed can also reduce the amount of adhesive required.

The joint and the insert 22 can be configured to define different flow paths for the fluid, which will now be described in more detail with reference to Figures 2-4. In each of the configurations described below, a hole is provided in one or both of the first component 10 or the second component to allow the introduction of adhesive into the cavity (e.g. via injection).

Figure 2 shows a cross-sectional side view of an assembled joint, including a first possible flow path for the adhesive. In the configuration shown in Figure 2, the projection 10 is shown seated within the hollow interior of the second component 16, with the insert 22 forming the closed end of the cavity 14 in which the projection sits. The projection 10 tapers towards its free end, and a circumferential space 24 is defined between the projection 10 and the side wall 26 of the cavity 14. The taper is not essential to form the space between the components and other means may be used. For example, the projection or the sidewalls could comprise spacers to maintain a gap between the projection and the side wall of the cavity or the first and second components 12, 16 could be held relative to each other in a vice or frame. Additionally or alternatively, the interior wall of the second component 16 may be tapered.

A hole 28 in the second component 16, specifically in the wall surrounding the hollow interior of the second component 16, is in fluid communication with the cavity 14. The hole 28 may open directly into the space 24. By providing the hole 28 in direct communication with the space 24, adhesive can be injected into the space 24. With the insert 22 forming a closed end to the cavity 14 adjacent to the free end of the projection 10, the adhesive injected into the space 24 is confined within the region in which it is most effective, that is the region between the projection 10 and the cavity 14.

A stop 21, here formed as two projecting lugs, is formed within the hollow interior of the second component 16 to limit the extent to which the insert 22 can be pushed into the hollow interior. This limits the depth of the cavity and thus the dead volume of the cavity 14 when the projection 10 is seated within the cavity 14. The stop is not necessarily formed of lugs and any structure that limits travel of the insert can be used here. Equally, stop 21 may be omitted entirely and other means, e.g. an interference fit between the insert and the second component may be used to hold the insert in place.

Reducing the dead volume of the cavity may reduce the volume of adhesive required. In particular, reducing the dead volume of the cavity 14 that is not defined between the outer surface of the projection and the inner surface of the second component can ensure that most or all of the adhesive introduced into the cavity acts to form a bond between the first and second components 12, 16. In some examples, the dead volume of the joint (without adhesive) defined in the circumferential gap between the first and second components comprises at least 50% of the dead volume of the joint. In some example, the dead volume in the circumferential gap is at least 70%, at least 80% or at least 90%, or at least 95% of the dead volume within the cavity.

In the configuration shown in Figure 2, the insert 22 takes its simplest form and provides an obstruction to prevent or limit egress of adhesive from the region in which it is useful. However, the insert 22 can comprise additional feature to guide the flow of adhesive into the space 24 between the wall 26 and the projection 10, as will now be described with reference to Figures 3 and 4.

Figure 3 shows a cross-sectional view of a joint between two components comprising an insert 22 in another configuration. In the configuration shown in Figure 3, the insert 22 comprises a channel 30 which is in communication with the cavity 14, and through which adhesive can be delivered to the space 24. The channel 30 extends from an upstream open end 32, which is aligned with hole 28 in the side wall 26 of the second component 14, to a downstream open end 34. The downstream end 34 of the channel 30 opens into the cavity 14. Ideally, the downstream open end 34 of the channel 30 opens into the cavity 14 towards an outer edge of the insert 22, so that adhesive delivered via the channel 30 is delivered adjacent the side wall 26, and therefore adjacent the space 24. In the configuration shown in Figure 3, the channel 30 branches to deliver adhesive through multiple downstream open ends 34 located around the periphery of the insert 22, although in some configurations only a single open end 34 may be provided. The flow of adhesive through the joint is indicated with arrows A. To clearly illustrate the projection 10 and the insert 22 in the drawings, a space is shown between the free end of the projection and the insert 22. However, the skilled person will appreciate that this gap can be eliminated by bringing the free end of the projection 10 into abutment with the insert 22, thereby further reducing the dead volume within the cavity and guiding the flow of adhesive into the gap 24 between the projection and the side wall 26.

In the configuration of Figure 3, the insert 22 provides a dual function of providing a delivery conduit for delivering adhesive into the cavity 14 and also preventing (or reducing) the escape of adhesive from the cavity 14.

Figure 4 shows another configuration in which the insert 22 comprises a channel 30 which acts as a delivery conduit for distributing adhesive within the joint. However, in this configuration a hole 36 that provides access to the cavity 14 is provided in the projection 10 instead of the hole 28 in the side wall 26. In this configuration, the upstream opening 32 of the channel 30 is provided in the face of the insert 22 facing the projection 10 and is aligned with the hole 36 in the projection 10. The channel 30 extends through the body of the insert 22 to the downstream open end(s) 34, which deliver adhesive to the periphery on the cavity 14 and into the space 24 between the projection 10 and the side wall 26.

Although each of the configurations shown in Figures 2-4 provide different flow paths for the adhesive, each of the configurations confines the adhesive to the area in which it is needed, and can advantageously deliver the adhesive directly to the periphery of the cavity 14 and into the space 24 between the projection 10 and the side wall 26. It will also be understood that although each of the configurations described above comprises one injection point (one hole) that allows adhesive to be delivered to the cavity 14, multiple injection holes can be provided. Multiple holes 28 can be provided in the side walls 26, or multiple holes 36 can be provided in the projection 10. Holes can also be provided in both the projection 10 and the side walls 26.

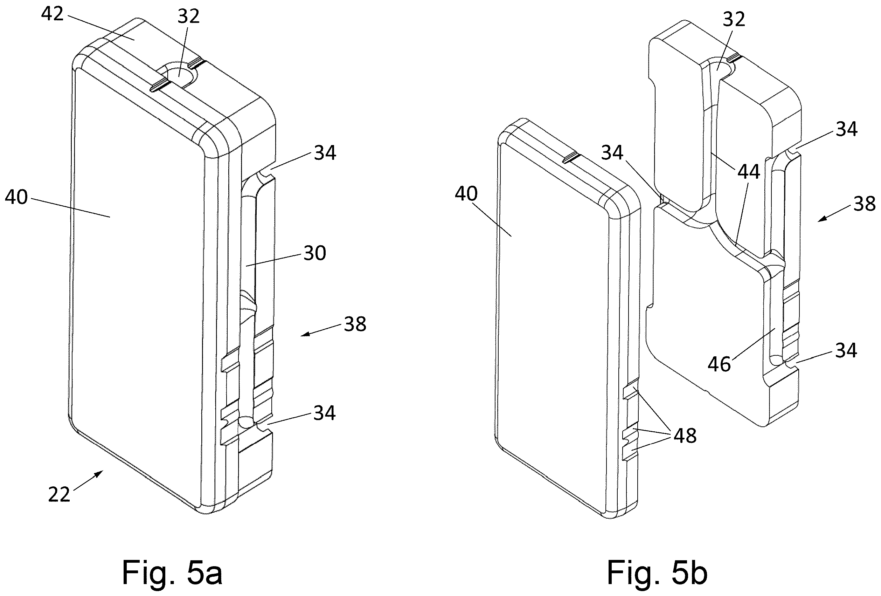

One exemplary insert configuration will now be described with reference to Figures 5a and 5b. Figure 5a shows an insert 22 comprising two portions that cooperate to provide a channel 30 configured to deliver adhesive from a hole 28 in a side wall 26 of the second component 10 (as shown in Figure 3). Figure 5b shows an exploded view of the insert 22 separated into its two portions. The insert 22 of Figures 5a and 5b can instead be formed as a single piece with a cross-sectional view corresponding to the view in Figure 5b.

The insert 22 comprises a first face 38 and a second face 40. The first face 38 is configured to face towards the projection 10, and the second face 40 is configured to face away from the projection 10. The insert 22 also comprises side surfaces 42. Because the insert 22 shown in Figures 5a and 5b has a rectangular cross-section, the insert comprises four side surfaces 42. However, the insert 22 is sized and shaped to fit the hollow interior of the second component 14 and can comprise any number of sides of a suitable shape to define the closed end of the cavity 14.

The channel 30 extends through the insert 22 to provide fluid communication between the upstream open end 32 (which is configured to align with the hole 28) and a downstream open end 34 which delivers the adhesive to the cavity 13. The upstream open end 32 is provided in a side surface 42 of the insert 22 and is coupled to a closed channel portion 44 (shown in Figure 5b) which runs through an interior of the insert 22. The closed channel portion 44 starts as a single channel and then branches, with the branch channels extending towards the outer side surfaces of the insert 22.

At or near the side surface 42 of the insert 22, the channels turn towards the first face 38 in which the downstream opening is provided. In the configuration shown in Figures 5a and 5b, the channel 30 also comprises an open channel portion 46, which extends from the closed channel portion 44 and is formed as a groove extending along a side surface 42 of the insert 22 before opening into the first face 38, the groove defining a corresponding notch out of the first face 38, to deliver the adhesive to the cavity 14. The side surfaces 42 may also comprise alignment grooves 48. The alignment grooves 48 can be configured to engage corresponding runners (e.g. longitudinal ridges) or pins on an interior surface of the second component 16. The engagement between the grooves 48 and the pins or runners (not shown) can be configured to ensure that the insert 22 maintains an a desired position and orientation within the hollow interior of the second component 16. Any suitable locating means configured to engage the grooves 48 may be used and the disclosure is not limited to pins or runners.

Although the insert 22 shown in Figures 5a and 5b comprises open and closed channel portions, the insert 22 can comprise only closed channel portions, as shown in Figure 4. In this configuration, the upstream end 32 of the channel 30 is provided in the first surface 38, and the channel 30 branches to form multiple closed channels that extend through the body of the insert 22 towards a plurality of downstream openings 34, also in the first surface 38 of the insert 22. In this configuration, the upstream opening 32 still provides a central injection point for the adhesive, and the channel 30 distributes the adhesive through multiple branch channels to deliver the adhesive to the periphery of the cavity 14. Of course, closed channel configurations can be implemented in the joint configuration shown in Figure 3 and partially open channel configurations can be implemented in the joint configuration shown in Figure 4 (e.g. with open channels formed in the first surface).

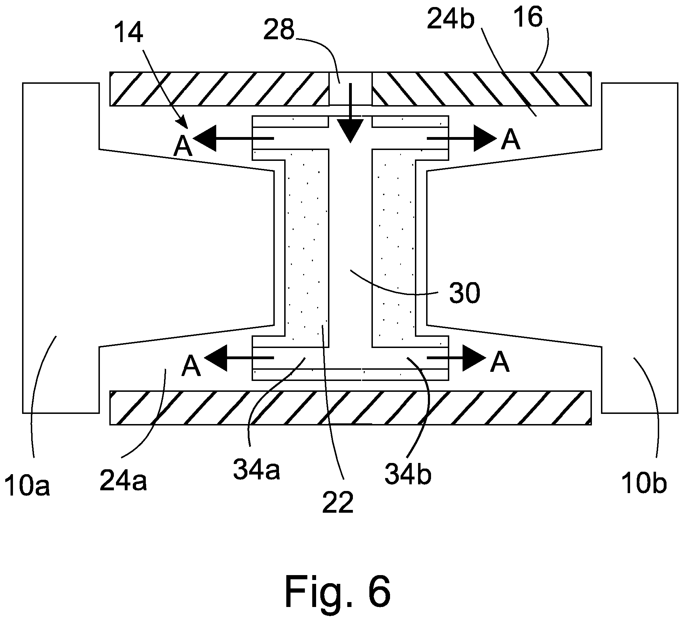

Turning now to Figure 6, any of the systems described above can be adapted for use with a hollow component configured to receive two projections, for example in opposing open ends of a hollow extrusion.

As shown in Figure 6, a first projection 10a is seated within a first open end of the hollow component. Between the projection 10a and the sidewall of the hollow component extends a circumferential space 24a. An insert 22 forms a closed ended cavity in which the projection 10a sits, similar to the configuration shown in Figure 3. However, unlike Figure 3, which shows the component 16 receiving a single projection, the hollow component of Figure 6 comprises a second open end, which received a second projection 10b. The insert 22 sits between the first and second projections 10a, and 10b, with opposing faces of the insert providing the closed end of each projection-receiving cavity. As shown in Figure 6, the insert 6 comprises a branched adhesive flow channel, configured to deliver adhesive from an upstream end aligned with hole 28 in the component 16, and downstream openings 34a, 34b opening into the circumferential spaces 24a, 24b surrounding each projection 10a, 10b.

In yet another configuration not shown in the drawings, the hollow cavity 14 can be configured to receive two projections side by side. In such embodiments, the projections may be provided on a single component or each projection may belong to a different component to be assembled within the hollow cavity. Where two (or more) projections are to be received in the same cavity, the cavity may further comprise guide features on an interior surface of the cavity to guide the two projections within the cavity. For example, the cavity may comprise one or more rails configured to separate the first projection from the second projection, and to slide the projections into place within the cavity.

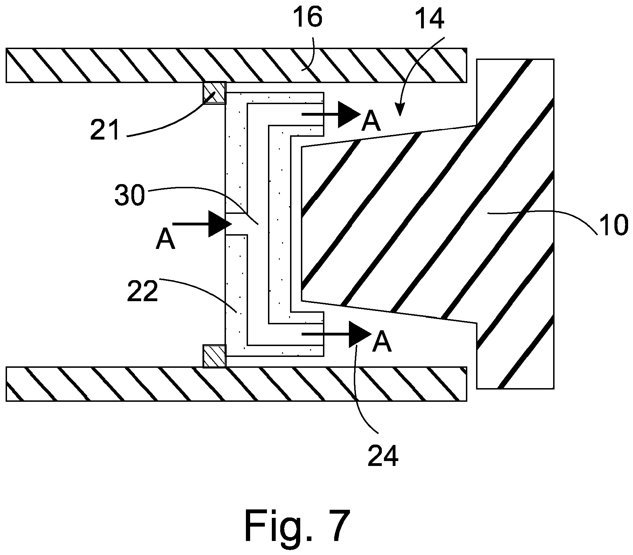

Figure 7 shows yet another implementation. As shown in Figure 7, the joint assembly comprises a projection 10, received in a hollow component 16, similar to the configuration described with reference to Figure 3. However, unlike Figure 3, access to the circumferential space 24 is not via the sidewall 26, but rather via a second open end of the hollow component 16. In this configuration, the insert 22 comprises a channel 30 that extends from a first end in a first face which opens into the space 24, to a second end which opens into the opposing face of the insert 22.

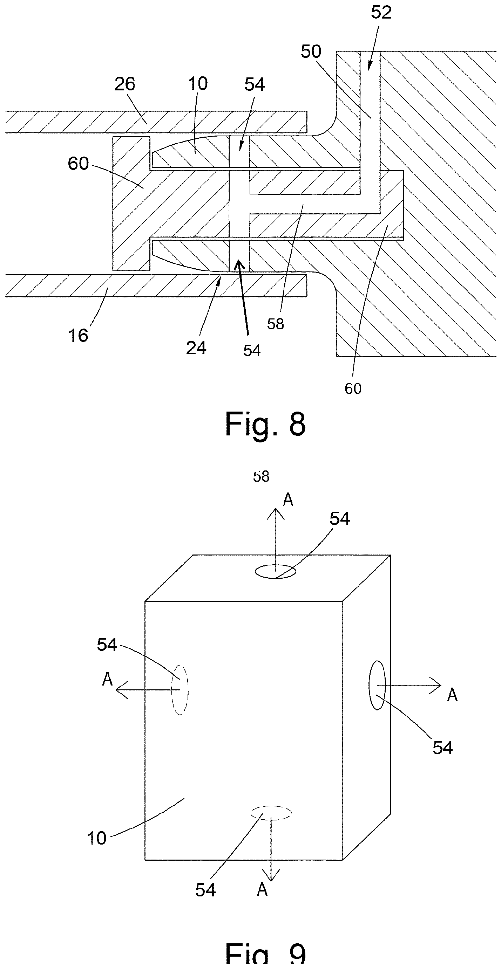

Figure 8 shows yet another implementation, in which the joint can be assembled with or without an insert. In the embodiment shown in Figure 8, channels within the projection 10 are used to deliver adhesive to the space 24.

As shown in Figure 8, the projection 10 comprises a branched channel 50 extending from an upstream end 52 to a plurality of downstream end 54. The plurality of downstream ends 54 open onto the at least one side surface of the projection 10. The side surfaces of the projection face the inner sidewalls of the hollow component 16. The upstream end 52 of the channel 50 is accessible when the projection 10 is received in the second component 16.

In some embodiments, the channel 50 is defined wholly by the projection, with a closed path running between the upstream end 52 and the downstream ends 54. In such embodiments, the free end of the projection 10 is closed to prevent adhesive escaping through an open end of the projection 10. Alternatively, an insert may be used to close the end of the projection.

However, in the configuration shown in Figure 8, the channel 50 is partially defined by a channel portion 58 that extends through an insert 60, which is configured to mate with the projection 10 to provide the closed channel 50 extending between the upstream end 52 and the downstream ends 54 of the channel 50. The channel portion 58 extending through the insert 60 also comprises an upstream open end and a downstream open end. The upstream open end of the insert channel portion 58 is configured to align with the upstream portion of the channel 50 in the projection 10, and the downstream open end of the channel portion 58 in the insert is configured to align with the downstream portion of the channel in the projection 10 to form fluid communication between the upstream end 52 of the channel 50 and the upstream end of the insert channel portion 58.. In this manner, the insert 60 mates with the projection 10 to provide a channel 50 through the projection which is configured to deliver adhesive through the channel 50 to the space 24.

The plurality of downstream ends 54 of the channel 50 can comprise two downstream ends, three downstream ends, or four or more downstream ends, each opening into a side surface of the projection 10. The openings can be equally spaced around a circumference of the projection 10 to aid even filling of the space 24.

In at least one example, as illustrated with a simple schematic in Figure 9, the projection 10 can have a generally rectangular cross-section, with each of the four side surfaces comprising a downstream opening 54. Each of the downstream openings 54 is fed via the channel 50 from one or more upstream openings 52, as shown in Figure 8. As adhesive travels through the channel 50 to be discharged in the direction of arrows A through the downstream openings 54, the adhesive spreads across the surfaces of the projection 10 through the space 24 until the void between the projection and the sidewall of the hollow component 16 is filled with adhesive.

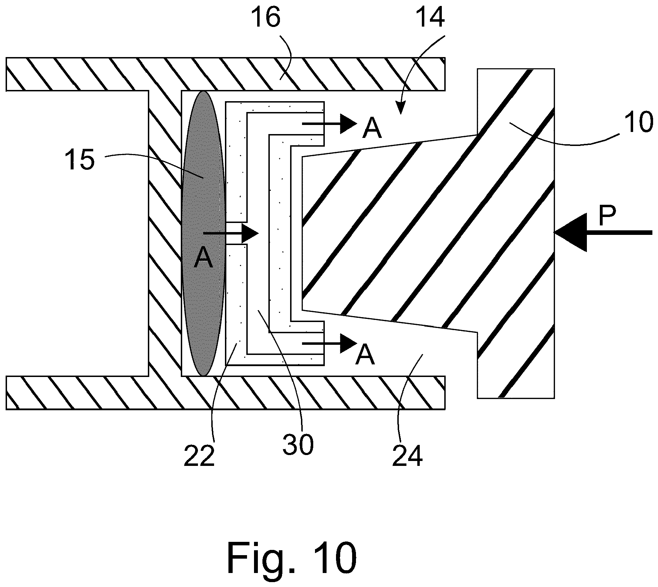

Figure 10 shows yet another embodiment in which an insert comprising a channel(s) can be used to deliver adhesive to a circumferential space between a projection and a side wall of a cavity. In the embodiment shown in Figure 10, the insert 22 takes a similar form to the insert 22 shown in Figure 70. However, in the embodiment shown in Figure 10, the cavity 14 comprises a closed end in which adhesive 15 may be disposed. The insert 22 is configured to act as a piston and is positioned between the projection 10 and the closed end of the cavity 14. The insert comprises a channel 30 having an open upstream end in fluid communication with the adhesive 15. As the projection 10 is inserted into the cavity 14, the insert 22 is pushed towards the closed end of the cavity and the volume of the space in which the adhesive sits decreases as the insert approaches the closed end. The reduction of the volume of the adhesive-filled cavity shown in Figure 10 forces the adhesive through the channel 30, and into the space 24 between the projection and the sidewalls of the component 16. In this way, the adhesive 15 move through the channel 30 in the manner described with reference to Figure 7, except movement of the insert 22 acts to discharge adhesive 15 through the channel 30 and into space 24.

A method for joining two vehicle components of the kind described above will now be described. The method includes providing a first component 12 having a projection 10 and a second component 16 having a hollow interior. An insert 22 is inserted into the hollow interior via an open end of the second component 16 to form a cavity 14 extending between a closed end formed by the insert 22 and the open end of the hollow interior. The projection 10 is inserted into the cavity 14 and seated with the insert 22 adjacent the free end of the projection 10. Preferably, the insert 22 and the projection 10 are inserted through the same open end of the second component 16. With the insert 22 and the projection 10 seated within the cavity 14, an adhesive is delivered through a hole in either (or both) the sidewall 26 of the second component 16 or the projection 10. The insert 22 confines the adhesive to the cavity 14 as described above with reference to the drawings, and ensures that adhesive flows into a space 24 between the projection 10 and the side wall 26.

The method can further comprise channelling the adhesive into the cavity 14 via the insert 22. The insert 22 can also ensure that the adhesive is delivered to the periphery of the cavity 14, into the space 24. The step of inserting the insert 22 and the projection 10 into the cavity 14 may be an automated step, which can be carried out by a robotic arrangement. The insert 22 may be inserted first, with the projection 10 inserted afterwards. Alternatively, the insert 22 and the projection 10 can be inserted together.

In some embodiments, the insert 22 can be used as a piston to drive adhesive through a channel (such as the channels described above) and into the space between the components. Accordingly, a method of joining two components comprises the steps of: providing a volume of adhesive in a cavity having a closed end; providing an insert comprising at least one channel in the cavity, the insert being disposed between a projection configured to be seated within the cavity and a closed end of the cavity; moving the insert 22 towards the closed end of the cavity to expel adhesive from the cavity through the at least one channel in the insert and into a space between the two components.

An alternative method for assembling a joint includes the steps of: providing a first component 12 comprising a projection 10 having at least one side surface and an end surface and a second component 16 comprising a hollow interior bounded by at least one sidewall and comprising an open end, inserting the projection 10 into the hollow interior of the second component 16, wherein the projection 10 comprises a branched channel 50 extending from an upstream end 52 to a plurality of downstream ends 54, wherein the plurality of downstream ends 54 open onto the at least one side surface of the projection 10, and wherein the upstream end 52 of the channel 50 is accessible external to the joint when the projection 10 is received in the second component 16. With the projection seated in the hollow component 16, the method further comprises the step of introducing adhesive into the channel 50 via a hole in the second component 16 to deliver adhesive into the circumferential space 24 between the side surfaces of the projection and the sidewalls of the second component.

## Claims

1. A system for joining vehicle components (12, 16), the system comprising:
a first component (12) comprising a projection (10);
a second component (16) comprising a hollow interior and an open end;
an insert (22) configured to be disposed within the hollow interior to form a cavity (14) between the insert (22) and the open end of the second component (16) to receive the projection (10),
wherein the projection (10) is configured to be received in the cavity (14) and secured within the cavity (14) with adhesive,
wherein at least one of a side wall (26) of the second component (16) and the projection (10) comprises a hole (28; 36) which is in communication with the cavity (14) for delivering adhesive to the cavity (14), and
wherein the insert (22) is configured to form a closed end of the cavity (14) thereby to guide adhesive flow around the projection (10).

2. A system for joining vehicle components (12, 16), the system comprising:
a first component (12) comprising a projection (10);
a second component (16) comprising a hollow interior and an open end;
an insert (22) configured to be disposed within the hollow interior to form a cavity (14) between the insert (22) and the open end of the second component (16) to receive the projection (10),
wherein the projection (10) is configured to be received in the cavity (14) and secured within the cavity (14) with adhesive,
wherein the insert (22) comprises a channel (30) comprising an upstream end (32) and a downstream end (34), wherein the downstream end (34) opens into the cavity (14), and wherein the upstream end (32) is in fluid communication with a volume exterior to the cavity (14),
wherein the insert (22) is configured to form a closed end of the cavity (14) thereby to guide adhesive flow around the projection (10).

3. The system of claim 1 or claim 2, wherein the second component (16) comprises a stop (21) configured to limit the travel of the insert (22) within the hollow interior of the second component (16) to limit the maximum depth of the cavity (14), and optionally:
wherein the stop (21) is configured to limit the travel of the insert (22) to a predetermined position, and wherein, in the predetermined position, the insert (22) is adjacent or abutting a free end of the protrusion seated within the cavity (14).

4. The system of any of claims 1-3, wherein the side wall (26) of the second component (16) comprises a or the hole (28).

5. The system of any preceding claim, wherein the insert (22) comprises a channel (30) configured to provide fluid communication between the hole (28; 36) and the cavity (14), wherein the upstream opening (32) is configured to align with the hole (28; 36) and the downstream opening (34) is configured to open into the cavity (14), and
wherein the channel (30) optionally comprises multiple branches, with each branch having a downstream opening (34) configured to open into the cavity (14), and each branch being in communication with the upstream opening (32).

6. The system of claim 5, wherein the channel (30) comprises:
an interior channel portion extending from the upstream opening (32) and comprising a closed channel extending through the insert (22); and
an exterior channel portion comprising an open channel extending along a surface of the insert (22) towards the downstream opening (34).

7. The system of claim 5 or claim 6, wherein the insert (22) comprises two parts, wherein a closed portion of the channel (30) is provided between the two parts.

8. The system of any of claims 5-7, wherein the or each downstream opening (34) is located at or adjacent to an outer edge of the insert (22).

9. The system of any preceding claim, wherein the insert (22) comprises a deformable material such as foam.

10. The system of any preceding claim, wherein the projection (10) is tapered.

11. The system of any preceding claim, wherein the projection (10) is secured within the cavity (14) with adhesive.

12. A method for joining two vehicle components (12, 16), the method comprising:
providing a first component (12) having a projection (10) and a second component (16) having a hollow interior;
inserting a insert (22) into the hollow interior via an open end of the second component (16) to form a cavity (14) extending between a closed end formed by the insert (22) and the open end;
inserting the projection (10) into the cavity (14);
introducing adhesive into the cavity (14) via a hole (28) in a side wall (26) of the second component (16), via a hole (36) in the projection (10), or via a hole (32) in the insert (22) to secure the first and second components (12, 16) together, wherein the cavity (14) guides adhesive around the projection (10) disposed in the hollow interior.

13. The method according to claim 12, wherein the adhesive is introduced into the cavity (14) via a channel (30) provided in the insert (22), and optionally, wherein introducing the adhesive comprises delivering the adhesive through a closed interior channel within the body of the insert (22), to a plurality of exterior branch channels at the surface of the insert (22), wherein the exterior branch channels are in communication with a circumferential space between the projection (10) and the walls of the cavity (14).

14. A method of assembling a vehicle or a vehicle chassis comprising joining two vehicle components (12, 16) according to the method of any of claims 12 or claim 13.

15. An insert (22) for an adhesive vehicle joint, the insert (22) comprising:
a body having first and second faces (38, 40), and at least one side surface (42);
a channel (30) extending from a first end (32) to a second end (34) and configured as a delivery conduit for an adhesive,
wherein the first end (32) of the channel (30) comprises an upstream opening in the at least one side surface (42) or the first face (38), and
wherein the second end (34) comprises a downstream opening in the first face (38),
and wherein the downstream openings are provided at or adjacent to an outer edge of the first face (38).

16. A system for joining vehicle components (12, 16), the system comprising;
a first component (12) comprising a projection (10, 60) having at least one side surface and an end surface;
a second component (16) comprising a hollow interior bounded by at least one sidewall (26) and comprising an open end;
wherein the projection (10, 60) is configured to be received in the hollow interior of the second component (16);
wherein the projection (10, 60) comprises a branched channel (50) extending from an upstream end (52) to a plurality of downstream ends (54), wherein the plurality of downstream ends (54) open onto the at least one side surface of the projection (10, 60), and wherein the upstream end of the channel (50) is accessible when the projection (10, 60) is received in the second component (16).

17. A bus comprising the system of any of claims 1-11 or 15-16.

## Patentansprüche

1. System zum Verbinden von Fahrzeugkomponenten (12, 16), wobei das System Folgendes umfasst:
eine erste Komponente (12), die einen Vorsprung (10) umfasst;
eine zweite Komponente (16), die einen hohlen Innenraum und ein offenes Ende umfasst;
einen Einsatz (22), der dazu konfiguriert ist, in dem hohlen Innenraum angeordnet zu werden, um einen Hohlraum (14) zwischen dem Einsatz (22) und dem offenen Ende der zweiten Komponente (16) zur Aufnahme des Vorsprungs (10) zu bilden;
wobei der Vorsprung (10) dazu konfiguriert ist, in dem Hohlraum (14) aufgenommen und mit Klebstoff in dem Hohlraum (14) fixiert zu werden,
wobei mindestens eine(r) von einer Seitenwand (26) der zweiten Komponente (16) und dem Vorsprung (10) ein Loch (28; 36) umfasst, das mit dem Hohlraum (14) zum Zuführen von Klebstoff zu dem Hohlraum (14) in Verbindung steht, und
wobei der Einsatz (22) dazu konfiguriert ist, ein geschlossenes Ende des Hohlraums (14) zu bilden, wodurch Klebstofffluss um den Vorsprung (10) herum geführt wird.

2. System zum Verbinden von Fahrzeugkomponenten (12, 16), wobei das System Folgendes umfasst:
eine erste Komponente (12), die einen Vorsprung (10) umfasst;
eine zweite Komponente (16), die einen hohlen Innenraum und ein offenes Ende umfasst;
einen Einsatz (22), der dazu konfiguriert ist, in dem hohlen Innenraum angeordnet zu werden, um einen Hohlraum (14) zwischen dem Einsatz (22) und dem offenen Ende der zweiten Komponente (16) zur Aufnahme des Vorsprungs (10) zu bilden;
wobei der Vorsprung (10) dazu konfiguriert ist, in dem Hohlraum (14) aufgenommen und mit Klebstoff in dem Hohlraum (14) fixiert zu werden,
wobei der Einsatz (22) einen Kanal (30) umfasst, der ein stromaufwärtiges Ende (32) und ein stromabwärtiges Ende (34) umfasst, wobei das stromabwärtige Ende (34) in dem Hohlraum (14) mündet und wobei das stromaufwärtige Ende (32) mit einem sich außerhalb des Hohlraums (14) befindenden Volumen in fluidischer Verbindung steht,
wobei der Einsatz (22) dazu konfiguriert ist, ein geschlossenes Ende des Hohlraums (14) zu bilden, wodurch Klebstofffluss um den Vorsprung (10) herum geführt wird.

3. System nach Anspruch 1 oder Anspruch 2, wobei die zweite Komponente (16) einen Anschlag (21) umfasst, der dazu konfiguriert ist, die Bewegung des Einsatzes (22) in dem hohlen Innenraum der zweiten Komponente (16) zu begrenzen, um die maximale Tiefe der Hohlraums (14) zu begrenzen, und wahlweise:
wobei der Anschlag (21) dazu konfiguriert ist, die Bewegung des Einsatzes (22) zu einer vorbestimmten Position zu begrenzen, und wobei sich der Einsatz (22) in der vorbestimmten Position neben einem freien Ende des in dem Hohlraum (14) angeordneten Vorsprungs befindet oder daran anstößt.

4. System nach einem der Ansprüche 1-3, wobei die Seitenwand (26) der zweiten Komponente (16) ein oder das Loch (28) umfasst.

5. System nach einem vorhergehenden Anspruch, wobei der Einsatz (22) einen Kanal (30) umfasst, der dazu konfiguriert ist, eine fluidische Verbindung zwischen dem Loch (28; 36) und dem Hohlraum (14) bereitzustellen, wobei die stromaufwärtige Öffnung (32) zur Ausrichtung auf das Loch (28; 36) konfiguriert ist und die stromabwärtige Öffnung (34) zum Münden in dem Hohlraum (14) konfiguriert ist, und
wobei der Kanal (30) wahlweise mehrere Zweige umfasst, wobei jeder Zweig eine stromabwärtige Öffnung (34) zum Münden in dem Hohlraum (14) umfasst und jeder Zweig mit der stromaufwärtigen Öffnung (32) in Verbindung steht.

6. System nach Anspruch 5, wobei der Kanal (30) Folgendes umfasst:
einen inneren Kanalabschnitt, der sich von der stromaufwärtigen Öffnung (32) erstreckt und einen sich durch den Einsatz (22) erstreckenden geschlossenen Kanal umfasst; und
einen äußeren Kanalabschnitt, der einen offenen Kanal umfasst, der sich entlang einer Oberfläche des Einsatzes (22) zu der stromaufwärtigen Öffnung (34) erstreckt.

7. System nach Anspruch 5 oder 6, wobei der Einsatz (22) zwei Teile umfasst, wobei ein geschlossener Abschnitt des Kanals (30) zwischen den beiden Teilen vorgesehen ist.

8. System nach einem der Ansprüche 5-7, wobei sich die oder jede stromabwärtige Öffnung (34) an oder neben einem äußeren Rand des Einsatzes (22) befindet.

9. System nach einem vorhergehenden Anspruch, wobei der Einsatz (22) ein verformbares Material wie beispielsweise Schaumstoff umfasst.

10. System nach einem vorhergehenden Anspruch, wobei der Vorsprung (10) konisch zulaufend ist.

11. System nach einem vorhergehenden Anspruch, wobei der Vorsprung (10) mit Klebstoff in dem Hohlraum (14) fixiert ist.

12. Verfahren zum Verbinden von zwei Fahrzeugkomponenten (12, 16), wobei das Verfahren Folgendes umfasst:
Bereitstellen einer ersten Komponente (12) mit einem Vorsprung (10) und einer zweiten Komponente (16) mit einem hohlen Innenraum;
Einführen eines Einsatzes (22) in den hohlen Innenraum über ein offenes Ende der zweiten Komponente (16) zum Bilden eines Hohlraums (14), der sich zwischen einem durch den Einsatz (22) gebildeten geschlossenen Ende und dem offenen Ende erstreckt;
Einführen eines Vorsprungs (10) in den Hohlraum (14); Einbringen von Klebstoff in den Hohlraum (14) über ein Loch (28) in einer Seitenwand (26) der zweiten Komponente (16), über ein Loch (36) in dem Vorsprung (10) oder über ein Loch (32) in dem Einsatz (22), um die erste und zweite Komponente (12, 16) aneinander zu fixieren, wobei der Hohlraum (14) Klebstoff um den in dem hohlen Innenraum angeordneten Vorsprung (10) herum führt.

13. Verfahren nach Anspruch 12, wobei der Klebstoff über einen in dem Einsatz (22) vorgesehenen Kanal (30) in den Hohlraum (14) eingebracht wird, und wahlweise wobei Einbringen von Klebstoff Zuführen des Klebstoffs durch einen geschlossenen inneren Kanal in dem Körper des Einsatzes (22) zu mehreren äußeren Zweigkanälen an der Oberfläche des Einsatzes (22) umfasst, wobei die äußeren Zweigkanäle mit einem Umfangsraum zwischen dem Vorsprung (10) und den Wänden des Hohlraums (14) in Verbindung stehen.

14. Verfahren zum Montieren eines Fahrzeugs oder eines Fahrzeugchassis, das Verbinden von zwei Fahrzeugkomponenten (12, 16) gemäß dem Verfahren nach einem von Anspruch 12 oder Anspruch 13 umfasst.

15. Einsatz (22) für eine Klebstofffahrzeugverbindung, wobei der Einsatz (22) Folgendes umfasst:
einen Körper mit einer ersten und zweiten Fläche (38, 40) und mindestens einer Seitenfläche (42);
einen Kanal (30), der sich von einem ersten Ende (32) zu einem zweiten Ende (34) erstreckt und als eine Zuführungsleitung für einen Klebstoff konfiguriert ist, wobei das erste Ende (32) des Kanals (30) eine stromaufwärtige Öffnung in der mindestens einen Seitenfläche (42) oder der ersten Fläche (38) umfasst, und
wobei das zweite Ende (34) eine stromabwärtige Öffnung in der ersten Fläche (38) umfasst,
und wobei die stromabwärtigen Öffnungen an oder neben einem äußeren Rand der ersten Fläche (38) vorgesehen sind.

16. System zum Verbinden von Fahrzeugkomponenten (12, 16), wobei das System Folgendes umfasst:
eine erste Komponente (12), die einen Vorsprung (10, 60) mit mindestens einer Seitenfläche und einer Endfläche umfasst;
eine zweite Komponente (16), die einen hohlen Innenraum umfasst, der durch mindestens eine Seitenwand (26) begrenzt wird und ein offenes Ende umfasst;
wobei der Vorsprung (10, 60) dazu konfiguriert ist, in dem hohlen Innenraum der zweiten Komponente (16) aufgenommen zu werden;
wobei der Vorsprung (10, 60) einen verzweigen Kanal (50) umfasst, der sich von einem stromaufwärtigen Ende (52) zu mehreren stromabwärtigen Enden (54) erstreckt, wobei die mehreren stromabwärtigen Enden (54) in der mindestens einen Seitenfläche des Vorsprungs (10, 60) münden, und wobei das stromaufwärtige Ende des Kanals (50) zugänglich ist, wenn der Vorsprung (10, 60) in der zweiten Komponente (16) aufgenommen ist.

17. Bus, der das System nach einem der Ansprüche 1-11 oder 15-16 umfasst.

## Revendications

1. Système de raccordement de composants de véhicule (12, 16), le système comprenant :
un premier composant (12) comprenant une saillie (10) ;
un second composant (16) comprenant un intérieur creux et une extrémité ouverte ;
une garniture (22) conçue pour être disposée dans l'intérieur creux de façon à former une cavité (14) entre la garniture (22) et l'extrémité ouverte du second composant (16) destinée à recevoir la saillie (10),
dans lequel la saillie (10) est conçue pour être reçue dans la cavité (14) et assujettie à l'intérieur de la cavité (14) au moyen d'un adhésif,
dans lequel une paroi latérale (26) du second composant (16) et/ou la saillie (10) comprennent un trou (28 ; 36) qui communique avec la cavité (14) pour l'acheminement de l'adhésif à la cavité (14) et
dans lequel la garniture (22) est conçue pour former une extrémité fermée de la cavité (14) de façon à guider l'écoulement d'adhésif autour de la saillie (10).

2. Système de raccordement de composants de véhicule (12, 16), le système comprenant :
un premier composant (12) comprenant une saillie (10) ;
un second composant (16) comprenant un intérieur creux et une extrémité ouverte ;
une garniture (22) conçue pour être disposée dans l'intérieur creux de façon à former une cavité (14) entre la garniture (22) et l'extrémité ouverte du second composant (16) destinée à recevoir la saillie (10),
dans lequel la saillie (10) est conçue pour être reçue dans la cavité (14) et assujettie à l'intérieur de la cavité (14) au moyen d'un adhésif,
dans lequel la garniture (22) comprend un canal (30) comprenant une extrémité amont (32) et une extrémité aval (34), l'extrémité aval (34) débouchant dans la cavité (14) et l'extrémité amont (32) étant en communication fluidique avec un volume extérieur à la cavité (14),
dans lequel la garniture (22) est conçue pour former une extrémité fermée de la cavité (14) de façon à guider l'écoulement d'adhésif autour de la saillie (10).

3. Système selon la revendication 1 ou la revendication 2, dans lequel le second composant (16) comprend une butée (21) conçue pour limiter le déplacement de la garniture (22) dans l'intérieur creux du second composant (16) afin de limiter la profondeur maximale de la cavité (14), et éventuellement :
dans lequel la butée (21) est conçue pour limiter le déplacement de la garniture (22) à une position prédéterminée, et dans lequel, dans la position prédéterminée, la garniture (22) est adjacente ou accolée à une extrémité libre de la saillie placée à l'intérieur de la cavité (14).

4. Système selon l'une quelconque des revendications 1 à 3, dans lequel la paroi latérale (26) du second composant (16) comprend un ou le trou (28).

5. Système selon l'une quelconque des revendications précédentes, dans lequel la garniture (22) comprend un canal (30) conçu pour assurer la communication fluidique entre le trou (28 ; 36) et la cavité (14), l'ouverture amont (32) étant conçue pour s'aligner avec le trou (28 ; 36) et l'ouverture aval (34) étant conçue pour déboucher dans la cavité (14) et
dans lequel le canal (30) comprend éventuellement de multiples ramifications, chaque ramification comportant une ouverture aval (34) conçue pour déboucher dans la cavité (14), et chaque ramification communiquant avec l'ouverture amont (32).

6. Système selon la revendication 5, dans lequel le canal (30) comprend :
une partie de canal intérieure s'étendant à partir de l'ouverture amont (32) et comprenant un canal fermé s'étendant à travers la garniture (22) ; et
une partie de canal extérieure comprenant un canal ouvert s'étendant le long d'une surface de la garniture (22) en direction de l'ouverture aval (34).

7. Système selon la revendication 5 ou la revendication 6, dans lequel la garniture (22) comprend deux parties, dans lequel une partie fermée du canal (30) est formée entre les deux parties.

8. Système selon l'une quelconque des revendications 5 à 7, dans lequel l'ouverture aval ou chaque ouverture aval (34) est située au niveau ou à côté d'un bord extérieur de la garniture (22).

9. Système selon l'une quelconque des revendications précédentes, dans lequel la garniture (22) comprend un matériau déformable tel que de la mousse.

10. Système selon l'une quelconque des revendications précédentes, dans lequel la saillie (10) est fuselée.

11. Système selon l'une quelconque des revendications précédentes, dans lequel la saillie (10) est assujettie à l'intérieur de la cavité (14) au moyen d'un adhésif.

12. Procédé de raccordement de deux composants de véhicule (12, 16), le procédé comprenant :
préparer un premier composant (12) comportant une saillie (10) et un second composant (16) comportant un intérieur creux ;
insérer une garniture (22) dans l'intérieur creux par une extrémité ouverte du second composant (16) de façon à former une cavité (14) s'étendant entre une extrémité fermée formée par la garniture (22) et l'extrémité ouverte ;
insérer la saillie (10) dans la cavité (14) ;
introduire un adhésif dans la cavité (14) par un trou (28) dans une paroi latérale (26) du second composant (16), par un trou (36) dans la saillie (10), ou par un trou (32) dans la garniture (22) afin d'assujettir les premier et second composants (12, 16) l'un à l'autre, la cavité (14) guidant l'adhésif autour de la saillie (10) disposée dans l'intérieur creux.

13. Procédé selon la revendication 12, dans lequel l'adhésif est introduit dans la cavité (14) par un canal (30) formé dans la garniture (22), et éventuellement dans lequel l'introduction de l'adhésif comprend l'acheminement de l'adhésif à travers un canal intérieur fermé dans le corps de la garniture (22), jusqu'à une pluralité de canaux de ramification extérieurs à la surface de la garniture (22), dans lequel les canaux de ramification extérieurs communiquent avec un espace circonférentiel entre la saillie (10) et les parois de la cavité (14).

14. Procédé d'assemblage d'un véhicule ou d'un châssis de véhicule comprenant le raccordement de deux composants de véhicule (12, 16) selon le procédé de l'une ou l'autre de la revendication 12 et la revendication 13.

15. Garniture (22) pour un raccord adhésif de véhicule, la garniture (22) comprenant :
un corps comportant des première et seconde faces (38, 40), et au moins une surface latérale (42) ;
un canal (30) s'étendant d'une première extrémité (32) à une seconde extrémité (34) et conçu comme un conduit d'acheminement pour un adhésif,
dans lequel la première extrémité (32) du canal (30) comprend une ouverture amont dans l'au moins une surface latérale (42) ou la première face (38) et
dans lequel la seconde extrémité (34) comprend une ouverture aval dans la première face (38),
et dans lequel les ouvertures aval sont formées au niveau ou à côté d'un bord extérieur de la première face (38) .

16. Système de raccordement de composants de véhicule (12, 16), le système comprenant :
un premier composant (12) comprenant une saillie (10, 60) comportant au moins une surface latérale et une surface d'extrémité ;
un second composant (16) comprenant un intérieur creux délimité par au moins une paroi latérale (26) et comprenant une extrémité ouverte ;
dans lequel la saillie (10, 60) est conçue pour être reçue dans l'intérieur creux du second composant (16) ;
dans lequel la saillie (10, 60) comprend un canal ramifié (50) s'étendant d'une extrémité amont (52) à une pluralité d'extrémités aval (54), dans lequel la pluralité d'extrémités aval (54) débouchent sur l'au moins une surface latérale de la saillie (10, 60), et dans lequel l'extrémité amont du canal (50) est accessible lorsque la saillie (10, 60) est reçue dans le second composant (16).

17. Bus comprenant le système selon l'une quelconque des revendications 1 à 11 ou 15 et 16.
